# FASCICULE DE BREVET EUROPEEN

(11) **EP 2 429 846 B1**
(45) Date de publication et mention de la délivrance du brevet: **30.03.2016**
(21) Numéro de dépôt: 10728754.2
(22) Date de dépôt: 12.05.2010
(51) Int. Cl.: B60J 5/10, B60J 5/04, C09J 5/06

(54) **PROCEDE D'ASSEMBLAGE D'UN OUVRANT DE VEHICULE**
VERFAHREN ZUR MONTAGE EINER BEWEGLICHEN FAHRZEUGPLATTE
METHOD FOR ASSEMBLING A VEHICLE MOVABLE PANEL

(30) Priorité: 14.05.2009 FR 0953190
(43) Date de publication de la demande: 21.03.2012
(73) Titulaire: Compagnie Plastic Omnium, 69007 Lyon (FR)
(72) Inventeur: RAJON, Alexis, F-69004 Lyon (FR); CHERON, Hugues, F-01800 Meximieux (FR)
(74) Mandataire: Remy, Vincent Noel Paul
(86) Numéro de dépôt international: PCT/FR2010/050930
(87) Numéro de publication internationale: WO 2010/130958

(56) Documents cités:
- EP-A- 0 266 514
- EP-A- 1 927 453
- DE-A1- 10 339 416
- FR-A- 2 768 085
- FR-A1- 2 938 494
- GB-A- 1 315 373
- GB-A- 2 075 435

## Description

La présente invention concerne un procédé d'assemblage d'un ouvrant de véhicule.

On connaît dans l'état de la technique un ouvrant de véhicule comprenant un panneau intérieur, ou caisson, sur lequel sont rapportés un ou plusieurs panneaux externes, ou peaux de carrosserie, collés à leur périphérie à l'aide d'un cordon de colle. La colle est constituée d'un matériau polymère posé dans un état non réticulé et apte à lier les deux panneaux une fois dans son état réticulé.

Pour assembler les deux panneaux, on place chacun de ceux-ci dans un gabarit. On pose ensuite la colle sur un des panneaux et on rapproche les gabarits de sorte que la colle soit en contact avec les panneaux. On laisse les panneaux dans les gabarits suffisamment longtemps pour que la colle réticule et lie durablement ces deux panneaux.

En outre, pour accélérer la réticulation de la colle, on applique généralement un traitement thermique à la face tournée vers l'extérieur d'au moins un des deux panneaux, qui par conduction, chauffe la face du panneau tournée vers l'autre panneau et, par conséquent, la colle.

Ce procédé permet un assemblage satisfaisant des deux panneaux quel que soit le matériau dont ils sont constitués mais nécessite des investissements relativement importants.

Le document FR 2 768 085 décrit un procédé de fabrication d'un ouvrant de véhicule automobile qui consiste à réaliser une armature en matériau plastique composite comprenant au moins une chambre.

La présente invention a notamment pour but de remédier à cet inconvénient en fournissant un procédé d'assemblage d'un ouvrant de véhicule permettant d'économiser des coûts de fabrication.

A cet effet, l'invention a pour objet un procédé d'assemblage d'un ouvrant de véhicule comprenant deux panneaux, au moins un des panneaux comprenant une piste de collage, au moins un des panneaux comprenant au moins une dépression agencée pour longer au moins partiellement la piste de collage une fois les panneaux assemblés, la dépression comprenant au moins une paroi munie d'au moins un orifice. Le procédé comprend les étapes suivantes:
- mise en place d'un cordon de colle sur la piste de collage,
- mise en référence des deux panneaux de sorte que le cordon de colle soit placé entre les deux panneaux et que la dépression du panneau forme un corps creux en combinaison avec l'autre panneau,
- insufflation d'un flux d'air chaud dans le corps creux par le ou l'un au moins des orifices. - le corps creux est situé entre une bordure de l'ouvrant et le cordon de colle, l'ouvrant comprenant une portion située entre le corps creux et la bordure, une telle portion étant dépourune d'un cordon de colle.

Ainsi, la réticulation de la colle est accélérée à l'aide d'un chauffage local de l'ouvrant car le ou les corps creux forment des canaux pour le passage de l'air chaud. Ces canaux étant en effet formés au voisinage du cordon de colle, ils permettent de chauffer le cordon de colle et de faire réticuler la colle.

Le chauffage étant local, les équipements pour générer celui-ci sont beaucoup moins volumineux et beaucoup moins coûteux que dans l'état de la technique et l'énergie dépensée pour le chauffage du panneau est également moindre. En outre, le chauffage étant localisé, il peut être dirigé plus directement sur la colle et le temps de chauffage nécessaire pour que la colle soit réticulée peut être diminué. Les coûts de fabrication de l'ouvrant sont de ce fait diminués.

Enfin, les panneaux n'étant pas directement chauffés, ce procédé permet d'éviter plus facilement les problèmes de déformation des panneaux, notamment du panneau extérieur du véhicule, durant l'étape de chauffage de l'ouvrant.

Le procédé peut également comprendre une étape de fixation par encliquetage des deux panneaux, effectuée avant ou pendant l'étape d'insufflation d'air chaud. De cette façon, les panneaux sont maintenus dans leur position de référence l'un par rapport à l'autre grâce aux éléments d'encliquetage et il n'est pas nécessaire d'utiliser un gabarit pour maintenir les panneaux en position lors de l'étape d'insufflation du flux d'air chaud. De cette façon, la réticulation de la colle peut même être achevée à température ambiante, ce qui permet d'économiser encore des coûts de fabrication pour l'assemblage de l'ouvrant, le temps de chauffe et l'énergie dépensée à cet effet étant encore diminuées.

Le procédé peut également comprendre une étape d'insufflation d'un flux d'air froid contre un panneau de l'ouvrant, de préférence sur une face de celui-ci tournée vers l'extérieur pour garantir que celui-ci ne se déforme au contact de l'air chaud. Ceci est particulièrement avantageux pour un ouvrant comprenant un panneau réalisé en un matériau thermoplastique.

L'invention a également pour objet un ouvrant de véhicule comprenant deux panneaux assemblés à l'aide d'un cordon de colle s'étendant entre les deux panneaux, au moins une dépression longeant au moins partiellement le cordon de colle étant ménagée dans un des panneaux pour former un corps creux en combinaison avec l'autre panneau, au moins une paroi de la dépression étant munie d'au moins un orifice.

Un tel ouvrant peut être fabriqué grâce au procédé tel que défini ci-dessus.

L'ouvrant selon l'invention peut également comprendre l'une ou plusieurs des caractéristiques de la liste suivante:
- le corps creux longe le cordon de colle sur la totalité de son trajet, ce qui permet un chauffage et une réticulation plus efficaces du cordon de colle, celui-ci étant chauffé sur tout son trajet,
- le cordon de colle s'étend à la périphérie de l'un au moins des panneaux et sur tout le pourtour de celui-ci, ce qui permet d'optimiser la zone étanche de l'ouvrant, celle-ci étant délimitée par le cordon de colle,
- Le corps creux est situé entre une bordure de l'ouvrant et le cordon de colle. L'ouvrant comprend une portion située entre le corps creux et la bordure, une telle portion étant dépourvue d'un cordon de colle. On notera que la bordure peut délimiter le contour externe de l'ouvrant et/ou une ouverture centrale de celui-ci. De cette façon, la zone étanche du hayon ne comprend pas le corps creux dans lequel on a insufflé de l'air chaud, ce qui permet de simplifier l'ouvrant et son procédé de fabrication. En effet, comme le corps creux comprend des orifices, il est préférable de le placer pour des raisons d'étanchéité à l'extérieur du périmètre collé de l'ouvrant,
- le corps creux entoure le cordon de colle. Cela permet de réaliser plus facilement l'étanchéité de l'ouvrant entre les deux panneaux.
- l'ouvrant comprend des moyens de fixation additionnels des deux panneaux, de préférence par encliquetage. Ces moyens de fixation permettent de figer les panneaux dans leur position finale, le temps que le cordon de colle réticule. Ceci est notamment avantageux dans le cas où le temps de chauffage déterminé n'est pas suffisant pour permettre la réticulation du cordon de colle dans son ensemble,
- le corps creux comprend un bord longitudinal longeant le cordon de colle et un bord longitudinal opposé, longeant de préférence la bordure de l'ouvrant, les moyens de fixation étant ménagés au voisinage du bord longitudinal opposé. Cela permet d'assurer une bonne fermeture du corps creux. Les pertes d'air chaud sont ainsi limitées, la majorité de l'air chaud insufflé dans le corps creux se dirigeant vers le cordon de colle. Le procédé est donc encore optimisé et les coûts de fabrication diminués puisque l'énergie nécessaire pour obtenir une réticulation donnée du cordon de colle est également diminuée,
- l'ouvrant comprend au moins un élément apte à être inséré dans l'un des orifices du corps creux, de préférence par encliquetage. Cela permet de boucher ces orifices et d'augmenter de ce fait l'aspect esthétique de l'ouvrant, une fois que l'air chaud a été insufflé dans celui-ci. L'étanchéité de celui-ci peut également s'en trouver améliorée,
- la dépression présente une section transversale en U et comprend une paroi de fond et deux parois latérales, l'orifice étant agencé sur la paroi de fond de la dépression. De ce fait, on facilite l'insufflation d'air entre les deux panneaux, le fond du corps creux étant plus accessible depuis l'extérieur de l'ouvrant,
- le panneau comprenant la dépression est un panneau intérieur de l'ouvrant, tourné vers l'habitacle du véhicule lorsque l'ouvrant est monté sur le véhicule. De ce fait, l'aspect extérieur du véhicule n'est pas dégradé par la présence du corps creux et on dispose encore d'une flexibilité de conception satisfaisante concernant la conformation du panneau extérieur de l'ouvrant,
- au moins un des panneaux comprend une piste de collage pour accueillir le cordon de colle, celle-ci étant bordée par au moins une nervure, de préférence deux nervures délimitant la piste, ce qui permet de limiter, voire d'éviter, les fuites de la colle hors de la zone de collage et de diminuer la quantité de colle utilisée et par conséquent, les coûts d'assemblage de l'ouvrant,
- un panneau extérieur de l'ouvrant, tourné vers l'extérieur du véhicule lorsque l'ouvrant est monté sur le véhicule, est réalisé en matériau thermoplastique tel que le polypropylène. Le procédé selon l'invention est particulièrement avantageux dans ce cas puisqu'un tel panneau ne peut être chauffé de façon trop importante sans être déformé. En effet, les procédés selon l'état de la technique sont donc d'autant plus complexes à mettre en oeuvre pour ce type de panneau puisqu'ils nécessitent une étape de chauffage à une température contrôlée et durant un temps plus long,
- le panneau intérieur de l'ouvrant est réalisé en un matériau thermodurcissable ou thermoplastique, de préférence renforcé de fibres,
- l'ouvrant est en particulier un ouvrant arrière de véhicule, telle qu'une ridelle, une porte de coffre ou de préférence un hayon.

L'invention sera mieux comprise à la lecture de la description qui va suivre, donnée uniquement à titre d'exemple et faite en se référant aux dessins dans lesquels:
- la figure 1 est une vue en perspective d'un panneau intérieur de hayon prévu pour la réalisation du procédé selon un mode de réalisation de l'invention,
- les figures 2A à 2D représentent une vue en coupe selon A-A d'un détail du hayon de la figure 1 lors des différentes étapes d'un procédé selon un mode de réalisation de l'invention.

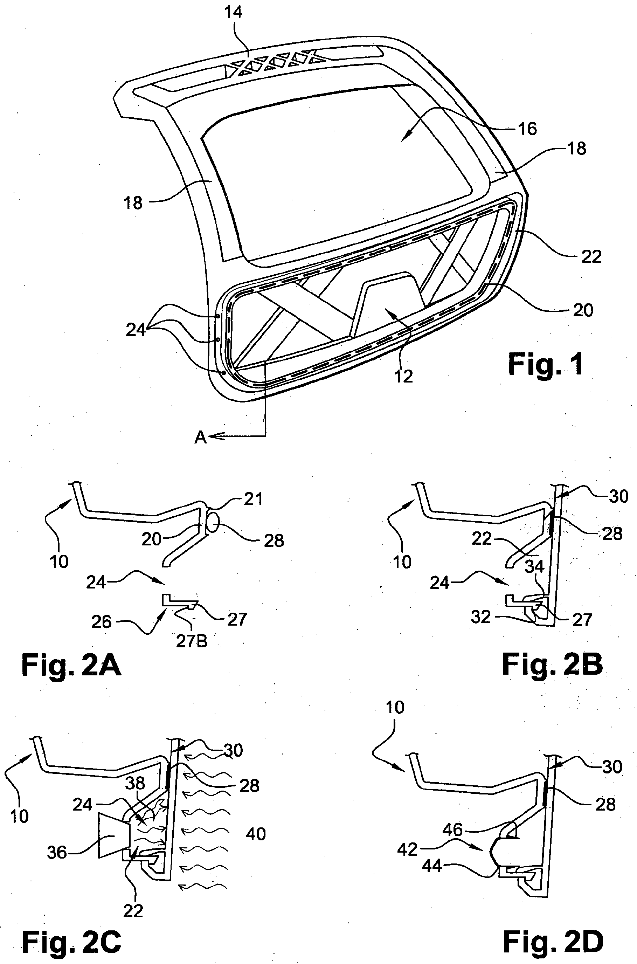

On a représenté sur la figure 1 un panneau intérieur 10 de hayon de véhicule vu depuis l'extérieur du véhicule. On l'a représenté avant qu'il ne soit recouvert par des panneaux extérieurs formant peau de carrosserie.

Un tel panneau 10, également appelé caisson, comprend une partie inférieure 12 et une partie supérieure 14 séparées par une ouverture centrale 16 prévue pour recevoir la lunette arrière, les parties supérieure et inférieure 12, 14 étant reliées par des montants latéraux 18 encadrant l'ouverture 16. Un tel panneau est réalisé en un matériau thermoplastique renforcé de fibres, tel que du polypropylène renforcé de fibres de verre (ou PPGFL).

Un tel caisson 10 est destiné à être recouvert en partie par des panneaux extérieurs de carrosserie ou peaux (non représentés sur la figure 1). En particulier, la partie inférieure 12 est destinée à être recouverte par une première peau de carrosserie et la partie supérieure 14 est recouverte par une deuxième peau de carrosserie, ces peaux étant généralement réalisées en matière thermoplastique telle que le polypropylène.

Les deux parties supérieure et inférieure 12, 14 sont renforcées par des nervures ainsi que les montants 18, le caisson 10 ayant une fonction structurelle.

Le caisson 10 comprend également une piste de collage 20 représentée en pointillés sur la figure 1 et permettant le collage de la peau inférieure sur la partie inférieure 12 du caisson. Cette piste de collage forme une boucle fermée s'étendant continûment sur le caisson 10 et est placée de façon à être située au voisinage de la périphérie de la peau inférieure lorsque la peau inférieure est mise en place sur le caisson. Cette piste de collage accueille un cordon de colle destiné à être placé entre les deux panneaux.

Comme on le voit sur la figure 2A, représentant un détail du caisson selon un mode de réalisation de l'invention, la piste de collage est bordée de deux nervures 21 s'étendant en saillie de la face du caisson tournée vers la peau et permettant de délimiter la piste de collage de sorte que la colle ne fuie pas hors de la piste.

Le caisson 10 comprend également une dépression 22 sur sa face tournée vers la peau, destinée à former un corps creux avec la peau inférieure une fois celle-ci mise en place sur le caisson 10, comme cela est par exemple visible sur la figure 2B. La dépression 22 longe la piste de collage et entoure celle-ci. Comme on le voit sur la figure 2A, la dépression 22 présente une section transversale en U et comprend un fond et deux parois latérales. Son fond est muni d'orifices 24 répartis régulièrement le long de la dépression.

Le caisson est également muni au niveau de son extrémité de languettes 26 permettant l'encliquetage du caisson 10 et de la peau de carrosserie correspondante. Chaque languette 26 comprend une partie d'extrémité 27 d'épaisseur supérieure au reste de la languette, un épaulement 27B marquant la limite entre la partie d'extrémité et le reste de la languette.

De telles languettes 26 sont ménagées en bordure de l'ouverture 16 et à l'extrémité inférieure et aux extrémités latérales du caisson, en bordure de la partie inférieure 12 de celui-ci. Elle sont réparties régulièrement au niveau des ces bords du caisson.

Ainsi, concernant la dépression située en partie inférieure 12 du caisson, elle se trouve entre la bordure externe du caisson et la piste de collage 20 sur ses tronçons inférieurs et latéraux, et entre la bordure longeant l'ouverture centrale du caisson et la piste de collage sur son tronçon supérieur. La portion de l'ouvrant située entre la dépression et la bordure externe ou centrale du hayon est dépourvue de piste de collage. Par conséquent le corps creux formé par la dépression et un panneau extérieur de l'ouvrant n'appartient pas au périmètre d'étanchéité de l'ouvrant.

Un tel caisson permet de réaliser un procédé d'assemblage du caisson 10 et d'une peau de carrosserie selon un mode de réalisation de l'invention. On va maintenant décrire en référence aux figures 2A à 2D représentant un détail du caisson en coupe selon A-A de la figure 1, les différentes étapes du procédé d'assemblage selon un mode de réalisation de l'invention du caisson 10 avec une peau de carrosserie.

Lors d'une première étape, représentée sur la figure 2A, on pose un cordon de colle 28 de façon continue sur la piste de collage 20.

On rapporte ensuite comme cela est montré sur la figure 2B, la peau inférieure 30 sur le caisson 10. Cette peau 30 est rapportée de sorte que le caisson et celle-ci soient mis en référence l'un par rapport à l'autre et que l'extrémité de la peau corresponde à celle du caisson.

On remarque qu'à son extrémité, la peau 30 comprend une forme spéciale dans laquelle la languette 26 est destinée à s'encliqueter lors de cette étape de mise en référence de la peau 30 et de la partie inférieure 12 du caisson 10. En particulier, la peau comprend un retour 32 à son extrémité et, s'étendant parallèlement à son extrémité, une languette 34 flexible.

Lorsque l'on rapproche la peau de la languette 26 du caisson, la languette 34 est déformée de sorte que l'espace entre celle-ci et le retour 32 s'agrandisse. La languette 26 du caisson peut alors passer dans ledit espace. Une fois la partie d'extrémité 27 passée entre la languette 34 et le retour 32, la languette 34 se rabat et revient en position de repos. La languette 26 du caisson est alors encliquetée avec la peau 30, l'épaulement 27B coopérant avec le retour 32.

Le cordon de colle 28 est alors aplati entre le caisson et la peau et se répartit sur toute la largeur de la piste de collage 20 mais ne coule pas en dehors de la piste de collage grâce à la présence des nervures 21.

Ensuite, lors d'une étape représentée à la figure 2C, on insère dans au moins un des orifices 24 du caisson une busette 36 qui insuffle un flux d'air chaud 38 dans le corps creux. Le corps creux forme alors un canal pour l'air chaud. Celui-ci se diffuse dans le corps creux et au voisinage de celui-ci. Cela permet de souffler de l'air chaud sur la colle et/ou la nervure 21 qui chauffe alors la colle par conduction et d'accélérer la réticulation de la colle.

A cette occasion, le caisson 10 et la peau 30 sont maintenus en référence l'un par rapport à l'autre grâce à l'encliquetage des languettes 26 et 32, 34.

L'homme du métier saura régler les paramètres de l'air soufflé, dont la température ou le débit, depuis la busette 38 pour que celui-ci permette la réticulation dé la colle sans pour autant déformer les panneaux.

Un flux d'air froid 40 peut également être soufflé sur la face extérieure de la peau 30, pour éviter une déformation de celle-ci du fait de la chaleur, notamment lorsqu'elle est réalisée en thermoplastique, par exemple en polypropylène, éventuellement chargé.

Une fois la colle 28 réticulée, la busette 36 est ôtée de l'orifice et un capuchon 42 est ajouté pour boucher l'orifice 24, comme cela est représenté à la figuré 2D. Un tel capuchon permet d'améliorer l'esthétique du hayon et éventuellement son étanchéité.

Il est conformé en champignon et comprend une paroi latérale 44 légèrement déformable comprenant deux saillies périphériques 46 entre lesquelles vient s'encliqueter la paroi de la dépression 22.

Si la colle n'a pas totalement réticulé suite à ces étapes, le hayon peut encore être mis au repos le temps nécessaire. Les panneaux sont encore maintenus en référence pendant ce temps par l'encliquetage des languettes 26 et 32, 34.

On notera que l'invention n'est pas limitée au mode de réalisation précédemment décrits.

Concernant le procédé, les étapes d'insufflation d'air froid, d'encliquetage des languettes ou de mise en place du capuchon dans l'orifice sont optionnelles. Les panneaux peuvent également être maintenus en référence l'un par rapport à l'autre durant l'étape d'insufflation d'air chaud par un gabarit. Ils peuvent également être mis en référence l'un par rapport à l'autre par tout autre moyen que des moyens d'encliquetage, par exemple par des moyens de fixation par vissage, etc.

La colle 28 pourrait également être appliquée sur la peau avant que celle-ci soit mise en référence avec le caisson.

En outre, le caisson peut ne pas comprendre les nervures 21 ou la languette 26, ces moyens étant optionnels. Le hayon peut aussi ne pas être muni de capuchon, l'essentiel étant que l'étanchéité soit assurée à l'intérieur du périmètre défini par le cordon de colle. Le capuchon peut également ne pas être étanche et avoir uniquement une fonction esthétique.

On peut également noter que le caisson peut comprendre deux pistes de collages s'étendant de chaque côté de la dépression pour sécuriser la liaison entre le caisson et la peau. La dépression peut également être située à l'intérieur du périmètre défini par le cordon de colle, auquel cas la présence de capuchon étanche est nécessaire.

En outre, la dépression peut présenter une section transversale différente de ce qui a été décrite. Les orifices peuvent être placés à un autre endroit que sur le fond de la dépression et ne sont pas obligatoirement répartis uniformément sur tout le trajet dé la dépression. La dépression peut par exemple comprendre un unique orifice.

Les moyens d'encliquetage de la peau et du caisson peuvent également, s'ils existent, être de forme différente de ceux décrits et/ou être placés à un autre endroit qu'aux extrémités de la peau et du caisson.

On notera également que la dépression peut longer une partie seulement de la piste de collage, le panneau pouvant alors comprendre plus d'une dépression. La dépression peut également être ménagée sur la peau de carrosserie au lieu d'être ménagée sur le caisson, même si l'esthétique du véhicule pourrait alors être dégradée.

Le caisson et les peaux peuvent également avoir une autre forme que celle décrite. Le caisson peut par exemple ne pas comprendre de nervures de renfort. En outre, le caisson peut être recouvert par une unique peau recouvrant les parties supérieure inférieure ainsi que les montants de celui-ci. Dans ce cas, le trajet de la piste de collage est modifié et s'étend sur tout le pourtour du caisson et également autour de l'ouverture. Le cordon de colle peut aussi ne pas être continu, même si l'étanchéité de l'ouvrant s'en trouvait dégradée

Dans un hayon selon l'invention, la peau supérieure peut aussi être assemblée par collage mais égaiement par tout autre moyen. De même, la peau supérieure peut être assemblé par collage et la peau inférieure par un autre moyen.

Les matériaux des peaux et caissons ne sont pas non plus limités aux matériaux décrits. Ils peuvent par exemple être réalisés en un matériau thermodurcissable et/ou en un matériau métallique et/ou en verre.
Enfin, on notera que l'invention s'applique à tout type d'ouvrant de véhicule, par exemple un capot, une portière, ou un autre ouvrant arrière tel qu'une porte de coffre ou une ridelle.

## Revendications

1. Procédé d'assemblage d'un ouvrant de véhicule comprenant deux panneaux (10, 30), au moins un des panneaux (10) comprenant une piste de collage (20), un des panneaux (10) comprenant au moins une dépression (22) agencée pour longer au moins partiellement la piste de collage une fois les deux panneaux assemblés, la dépression (22) comprenant au moins une paroi munie d'au moins un orifice (24), **caractérisé en ce que**, le procédé comprend les étapes suivantes:
- mise en place d'un cordon de colle (28) sur la piste de collage (20),
- mise en référence des deux panneaux (10, 30) de sorte que le cordon de colle (28) soit placé entre les deux panneaux et que la dépression (22) du panneau forme un corps creux en combinaison avec l'autre panneau,
- insufflation d'un flux d'air chaud (38) dans le corps creux par le ou l'un au moins des orifices,
et **en ce que** le corps creux est situé entre une bordure de l'ouvrant et le cordon de colle, l'ouvrant comprenant une portion située entre le corps creux et la bordure, une telle portion étant dépourvue d'un cordon de colle.

2. Procédé selon la revendication précédente, comprenant une étape de fixation par encliquetage des deux panneaux (10, 30), effectuée avant ou pendant l'étape d'insufflation du flux d'air chaud (38).

3. Ouvrant de véhicule, comprenant deux panneaux (10, 30) assemblés à l'aide d'un cordon de colle (28) s'étendant entre les deux panneaux, au moins une dépression (22) longeant au moins partiellement le cordon de colle (28) étant ménagée dans un des panneaux (10) pour former un corps creux en combinaison avec l'autre panneau (30), au moins une paroi de la dépression étant munie d'au moins un orifice (24) et **caractérisé en ce que** le corps creux est situé entre une bordure de l'ouvrant et le cordon de colle, l'ouvrant comprenant une portion située entre le corps creux et la bordure, une telle portion étant dépourvue d'un cordon de colle.

4. Ouvrant selon la revendication précédente, dans lequel la bordure délimite le contour externe de l'ouvrant ou une ouverture centrale de celui-ci.

5. Ouvrant selon l'une quelconque des revendications 3 et 4, dans lequel le corps creux longe le cordon de colle sur la totalité de son trajet et entoure de préférence celui-ci.

6. Ouvrant selon l'une quelconque des revendications 3 à 5, comprenant des moyens de fixation additionnels (26, 32, 34) des deux panneaux, de préférence par encliquetage.

7. Ouvrant selon la revendication précédente, dans lequel le corps creux comprend un bord longitudinal longeant le cordon de colle et un bord longitudinal opposé, longeant de préférence la bordure de l'ouvrant, les moyens de fixation étant ménagés au voisinage du bord longitudinal opposé.

8. Ouvrant selon l'une quelconque des revendications 3 à 7, comprenant au moins un élément (42) apte à être inséré dans l'un des orifices (24) du corps creux, de préférence par encliquetage.

9. Ouvrant selon l'une quelconque des revendications 3 à 8, dans lequel la dépression (22) présente une section transversale en U et comprend une paroi de fond et deux parois latérales, l'orifice (24) étant agencé sur la paroi de fond de la dépression.

10. Ouvrant selon l'une quelconque des revendications 3 à 9, dans lequel le panneau comprenant la dépression est un panneau intérieur (10) de l'ouvrant, tourné vers l'habitacle du véhicule lorsque l'ouvrant est monté sur le véhicule.

11. Ouvrant selon l'une quelconque des revendications 3 à 10, dans lequel un panneau extérieur (30) de l'ouvrant, tourné vers l'extérieur du véhicule lorsque l'ouvrant est monté sur le véhicule, est réalisé en matériau thermoplastique tel que le polypropylène.

## Patentansprüche

1. Verfahren zur Montage eines Türflügels eines Fahrzeugs, der zwei Paneele (10, 30) umfasst, wobei mindestens eines der Paneele (10) eine Klebebahn (20) umfasst, wobei eines der Paneele (10) mindestens eine Vertiefung (22) umfasst, die vorgesehen ist, um mindestens teilweise an der Klebebahn entlang zu führen, sobald die zwei Paneele montiert sind, wobei die Vertiefung (22) mindestens eine Wand umfasst, die mit mindestens einer Öffnung (24) versehen ist, **dadurch gekennzeichnet ist, dass** das Verfahren die folgenden Schritte umfasst:
- Platzieren eines Klebstoffstrangs (28) auf der Klebebahn (20),
- Anordnen der zwei Paneele (10, 30), so dass der Klebstoffstrang (28) zwischen den zwei Paneelen platziert ist und dass die Vertiefung (22) des Paneels in Kombination mit dem anderen Paneel einen Hohlkörper bildet,
- Einblasen eines Heißluftstroms (38) in den Hohlkörper durch die oder die mindestens eine der Öffnungen,
und dass der Hohlkörper sich zwischen einem Rand des Türflügels und dem Klebstoffstrang befindet, wobei der Türflügel einen Teil umfasst, der sich zwischen dem Hohlkörper und dem Rand befindet, wobei ein solcher Teil klebstoffstrangfrei ist.

2. Verfahren nach dem vorhergehenden Anspruch, umfassend einen Schritt des Befestigens der zwei Paneele (10, 30) durch Einrasten, der vor oder während des Schrittes des Einblasens des Heißluftstroms (38) erfolgt.

3. Türflügel eines Fahrzeugs, umfassend zwei Paneele (10, 30), die mit Hilfe eines Klebstoffstrangs (28) montiert sind, der sich zwischen den zwei Paneelen erstreckt, wobei mindestens eine Vertiefung (22), die mindestens teilweise an dem Klebstoffstrang (28) entlang führt, in einem der Paneele (10) vorgesehen ist, um in Kombination mit dem anderen Paneel (30) einen Hohlkörper zu bilden, wobei mindestens eine Wand der Vertiefung mit mindestens einer Öffnung (24) versehen ist, und **dadurch gekennzeichnet, dass** der Hohlkörper sich zwischen einem Rand des Türflügels und dem Klebstoffstrang befindet, wobei der Türflügel einen Teil umfasst, der sich zwischen dem Hohlkörper und dem Rand befindet, wobei ein solcher Teil klebstoffstrangfrei ist.

4. Türflügel nach dem vorhergehenden Anspruch, wobei der Rand den Außenumfang des Türflügels oder eine mittlere Öffnung von diesem begrenzt.

5. Türflügel nach einem der Ansprüche 3 und 4, wobei der Hohlkörper an dem Klebstoffstrang über dessen gesamte Strecke entlang führt und diesen vorzugsweise umgibt.

6. Türflügel nach einem der Ansprüche 3 bis 5, umfassend zusätzliche Mittel (26, 32, 34) für die Befestigung der zwei Paneele, vorzugsweise durch Einrasten.

7. Türflügel nach dem vorhergehenden Anspruch, wobei der Hohlkörper einen Längsrand umfasst, der an dem Klebstoffstrang entlang führt, und einen entgegengesetzten Längsrand umfasst, der vorzugsweise an dem Rand des Türflügels entlang führt, wobei die Befestigungsmittel in der Nähe des entgegengesetzten Längsrands vorgesehen sind.

8. Türflügel nach einem der Ansprüche 3 bis 7, umfassend mindestens ein Element (42), das in eine der Öffnungen (24) des Hohlkörpers einsetzbar ist, vorzugsweise durch Einrasten.

9. Türflügel nach einem der Ansprüche 3 bis 8, wobei die Vertiefung (22) einen U-förmigen Querschnitt aufweist und eine Bodenwand und zwei Seitenwände umfasst, wobei die Öffnung (24) an der Bodenwand der Vertiefung ausgebildet ist.

10. Türflügel nach einem der Ansprüche 3 bis 9, wobei das Paneel, das die Vertiefung umfasst, ein inneres Paneel (10) des Türflügels ist, das zu dem Fahrgastraum des Fahrzeugs hin gekehrt ist, wenn der Türflügel an dem Fahrzeug montiert ist.

11. Türflügel nach einem der Ansprüche 3 bis 10, wobei ein äußeres Paneel (30) des Türflügels, das nach außerhalb des Fahrzeugs gekehrt ist, wenn der Türflügel an dem Fahrzeug montiert ist, aus thermoplastischem Material wie Polypropylen ausgebildet ist.

## Claims

1. Method for assembling a vehicle opening comprising two panels (10, 30), at least one of the panels (10) comprising a bonding track (20), one of the panels (10) comprising at least one depression (22) arranged to run at least partially alongside the bonding track once the two panels have been assembled, the depression (22) comprising at least one wall provided with at least one hole (24), **characterised in that** the method comprises the following steps:
- application of a bead of adhesive (28) on the bonding track (20),
- referencing of the two panels (10, 30) so that the bead of adhesive (28) is placed between the two panels and that the depression (22) of the panel forms a hollow body in combination with the other panel,
- blowing of a hot air flow (38) into the hollow body through the or at least one of the holes,
and **in that** the hollow body is located between an edge of the opening and the bead of adhesive, the opening comprising a portion located between the hollow body and the edge, such portion not having a bead of adhesive.

2. Method according to the preceding claim, comprising a step of fixing the two panels (10, 30) by clipping, carried out before or during the step of blowing the hot air flow (38).

3. Vehicle opening comprising two panels (10, 30) assembled using a bead of adhesive (28) extending between the two panels, at least one depression (22) running at least partially alongside the bead of adhesive (28) being provided in one of the panels (10) to form a hollow body in combination with the other panel (30), at least one wall of the depression having at least one hole (24) and **characterised in that** the hollow body is located between an edge of the opening and the bead of adhesive, the opening comprising a portion located between the hollow body and the edge, such portion not having a bead of adhesive

4. Opening according to the preceding claim, wherein the edge defines the external contour of the opening or a central opening thereof.

5. Opening according to claim 3 or 4, wherein the hollow body runs alongside the bead of adhesive over its entire length and preferably surrounds it.

6. Opening according to any one of claims 3 to 5, comprising additional fixing means (26, 32, 34) for fixing the two panels, preferably by clipping.

7. Opening according to the preceding claim, wherein the hollow body comprises a longitudinal edge running alongside the bead of adhesive and an opposite longitudinal edge, preferably running alongside the edge of the opening, the fixing means being provided near the opposite longitudinal edge.

8. Opening according to any one of claims 3 to 7, comprising at least one member (42) adapted to be inserted into one of the holes (24) of the hollow body, preferably by clipping.

9. Opening according to any one of claims 3 to 8, wherein the depression (22) has a U-shaped cross-section and comprises a bottom wall and two side walls, the hole (24) being arranged on the bottom wall of the depression.

10. Opening according to any one of claims 3 to 9, wherein the panel comprising the depression is an inner panel (10) of the opening, facing towards the vehicle passenger compartment when the opening is mounted on the vehicle.

11. Opening according to any one of claims 3 to 10, wherein an outer panel (30) of the opening, facing towards the outside of the vehicle when the opening is mounted on the vehicle, is made of thermoplastic material such as polypropylene.
